# EUROPÄISCHE PATENTANMELDUNG

(11) **EP 4 818 800 A1**
(43) Veröffentlichungstag der Anmeldung: **07.10.2026**
(21) Anmeldenummer: 26170115.5
(22) Anmeldetag: 01.04.2026
(51) Int. Cl.: G02F 1/1676, G02F 1/167, G02F 1/1685, B60K 35/65, G09F 9/37

(54) **E-PAPER ANZEIGEPANEEL FÜR EINE PASSAGIERKABINE IN EINEM FLUGZEUG**

(30) Priorität: 04.04.2025 DE 102025113368
(71) Anmelder: Diehl Aerospace GmbH, 88662 Überlingen (DE)
(72) Erfinder: Schevardo, Dirk-Achim, 90552 Röthenbach (Haimendorf) (DE); Ettenhuber, Benjamin, 90537 Feucht (DE)
(74) Vertreter: Diehl Patentabteilung

(57) **Zusammenfassung**

Ein Anzeigepaneel 1 für eine Passagierkabine in einem Flugzeug, welches nach Art eines elektronischen Papiers ausgebildet ist, wobei das Anzeigepaneel eine Partikelschicht 2 umfasst, welche eine Sichtseite 3 und eine der Sichtseite 3 gegenüberliegende Rückseite 4 aufweist und wobei das Anzeigepaneel 1 eine Frontschicht 5 umfasst, welche die Partikelschicht 2 an der Sichtseite 3 bedeckt, wobei sich die Partikelschicht 2 und die Frontschicht 5 flächig über das gesamte Anzeigepaneel 1 erstrecken. Ferner umfasst das Anzeigepaneel 1 eine Steuerschicht 6, welche an der Rückseite 4 der Partikelschicht 2 angeordnet ist. Die Steuerschicht 6 besteht dabei aus einer Mehrzahl von jeweils einzeln ansteuerbaren Formabschnitten 7a - i und wenigstens einem Anzeigeabschnitt 8a, b, c, wobei die Formabschnitte 7a - i jeweils eine Formfläche 12 a - i aufweisen und wobei der Anzeigeabschnitt 8a, b, c in eine Mehrzahl von jeweils einzeln ansteuerbaren Pixelabschnitten 13b, c aufgeteilt ist, wobei die Pixelabschnitte 13b, c jeweils eine Pixelfläche 14b, c aufweisen und wobei jede der Formflächen 12 a - i um einen Faktor von wenigstens Zehn größer als jede Pixelfläche 14b, c ist.

## Beschreibung

Die Erfindung betrifft die Anzeige von Anzeigeinhalten in einer Passagierkabine in einem Flugzeug.

Elektronisches Papier, auch als E-Paper bekannt, ermöglicht eine energieeffiziente Darstellung von Text und Grafiken. Die E-Paper-Technologie basiert auf Mikrokapseln, die Pigmente in einer Flüssigkeit enthalten und durch elektrische Felder bewegt werden, um Bilder und Texte ohne Hintergrundbeleuchtung darzustellen. Im Vergleich zu herkömmlichen Displays benötigt E-Paper nur Energie bei der Änderung der Darstellung. Die Technologie wird beispielsweise in E-Book-Readern, digitalen Preisschildern und Informationsanzeigen eingesetzt. Durch die hohe Lesbarkeit bei direkter Lichteinstrahlung und den niedrigen Stromverbrauch, ist die E-Paper-Technologie eine vielversprechende Zukunftstechnologie in verschiedenen Anwendungsbereichen.

Aufgabe der vorliegenden Erfindung ist es, Verbesserungen hinsichtlich der Anzeige von Anzeigeinhalten in einer Passagierkabine in einem Flugzeug vorzuschlagen.

Die Aufgabe wird durch ein Anzeigepaneel mit den Merkmalen des Anspruch 1 gelöst. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Anzeigepaneel ist dazu ausgebildet im Inneren einer Passagierkabine eines Flugzeuges angeordnet bzw. angebracht zu werden. Insbesondere ist das Anzeigepaneel dazu ausgebildet eine Sichtoberfläche der Passagierkabine zu bilden oder an einer Sichtoberfläche der Passagierkabine angebracht bzw. angeordnet zu werden. Bevorzugt ist das Anzeigepaneel dazu ausgebildet großflächig an einem Deckenbereich und/oder Wandbereich der Passagierkabine angebracht bzw. angeordnet zu werden.

Das Anzeigepaneel ist dabei nach Art eines elektronischen Papiers, auch E-Paper genannt, ausgebildet. Dabei ist das Anzeigepaneel für die Anzeige von Anzeigeinhalten ausgebildet. Hierbei können insbesondere die Technologien "Prism3", siehe z.B. "https://www.eink.com/upload/2024_10_18/3_20241018080408bxcsgx81p0.pdf" (Abruf am 02.04.2025) und "Gallery plus", siehe z.B. "https://www.eink.com/brand/detail/Gallery_Plus" (Abruf am 02.04.2025), beide von dem Unternehmen E Ink, verwendet werden.

Das Anzeigepaneel weist eine Partikelschicht auf, wobei die Partikelschicht flächig ausgebildet ist. Die Partikelschicht umfasst dabei eine Vielzahl von Partikeln. Die Partikel sind insbesondere als Farbpartikel bzw. Farbpigmente ausgebildet. Die Partikelschicht umfasst dabei Partikel mindestens zweier unterschiedlicher Farben. Die Partikelschicht ist dabei nach Art der Partikelschicht bzw. nach Art der bilderzeugenden Schicht eines E-Paper-Displays ausgebildet. Beispielsweise kann ein Teil der Partikel als schwarze Partikel bzw. Pigmente ausgebildet und der andere Teil als weiße Partikel bzw. Pigmente. Insbesondere weist die Partikelschicht auch eine Vielzahl von Kapseln auf, wobei die jeweiligen Kapseln ein Fluid enthalten und wobei jeweils mehrere der Partikel in dem Fluid vorliegen. Ferner ist die Partikelschicht bevorzugt so ausgebildet, dass die Kapseln eng aneinander anliegen bzw. dass jede Kapsel von mehreren weiteren Kapseln umgeben ist und mit diesen in direktem Kontakt steht. Insbesondere sind die Kapseln so ausgebildet, dass diese jeweils mehrere Partikel einer jeweiligen Farbe enthalten.

Die Partikelschicht weist eine Sichtseite und eine der Sichtseite gegenüberliegende Rückseite auf. Die Partikelschicht ist dabei so ausgebildet, dass die Anzeigeinhalte auf der Sichtseite der Partikelschicht erzeugt bzw. angezeigt werden können. Die Anzeigeinhalte werden dabei durch die Partikel, insbesondere durch die unterschiedliche Anordnung der Partikel einer jeweiligen Farbe, auf der Sichtseite der Partikelschicht erzeugt bzw. angezeigt.

Das Anzeigepaneel weist auch eine Frontschicht auf, welche die Partikelschicht an der Sichtseite bedeckt. Die Frontschicht ist dabei flächig ausgebildet. Die Frontschicht ist dabei insbesondere als Elektrode aus einem transparenten elektrisch leitfähigen Material wie z.B. Indiumzinnoxid (ITO) ausgebildet. Insbesondere kann die Frontschicht direkt auf der Partikelschicht aufgebracht bzw. angeordnet sein. Die Partikelschicht und die Frontschicht erstrecken sich dabei flächig und insbesondere auch durchgehend und ununterbrochen über das gesamte Anzeigepaneel.

Des Weiteren umfasst das Anzeigepaneel eine Steuerschicht, wobei die Steuerschicht an der Rückseite der Partikelschicht angeordnet ist. Insbesondere kann die Steuerschicht direkt auf der Partikelschicht angeordnet bzw. angebracht sein. Die Steuerschicht ist dazu eingerichtet die Partikel der Partikelschicht anzuordnen, wodurch Anzeigeinhalte auf der Sichtseite der Partikelschicht erzeugt bzw. dargestellt werden können. Beispielsweise können hierdurch die Partikel auf unterschiedlichen Ebenen angeordnet werden, wobei insbesondere die Partikel einer jeweiligen Farbe auf einer jeweiligen Ebene zwischen der Sichtseite und der Rückseite in den Kapseln angeordnet werden.

Die Steuerschicht enthält zwei voneinander jeweils getrennte bzw. zu unterscheidende Typen von Bereichen. Jeder der ersten Bereiche ist gebildet durch mindestens einen jeweils einzeln ansteuerbaren Formabschnitt. Insgesamt sind jedoch mehrere Formabschnitte vorhanden. Dabei kann ein jeweiliger der Bereiche einen oder auch mehrere der Formabschnitte enthalten. Ein jeweiliger zweiter Bereich ist dabei gebildet durch einen jeweiligen Anzeigeabschnitt. Die Steuerschicht besteht also aus einer Mehrzahl von jeweils einzeln ansteuerbaren Formabschnitten und wenigstens einem Anzeigeabschnitt. Formabschnitte und Anzeigeabschnitte überlappen sich also nicht, überdecken also keine gemeinsamen Flächenbereiche. Insbesondere grenzen Formabschnitte und Anzeigeabschnitte jedoch lückenlos aneinander an. Die Formabschnitte sind dabei insbesondere jeweils als flächige Elektrode ausgebildet, wobei jede der Elektroden und damit jeder der Formabschnitte einzeln ansteuerbar sind. Dennoch sind die Formabschnitte jeder für sich nur in seiner Gesamtheit ansteuerbar. Insbesondere können die jeweiligen Elektroden auch aus mehreren direkt aneinander angrenzenden Einzelelektroden ausgebildet sein, wobei die jeweiligen Einzelelektroden gemeinsam ansteuerbar sind. Die Formabschnitte sind jeweils dazu eingerichtet mit einer bestimmten Spannung oder jeweils unterschiedlichen Spannungen beaufschlagt zu werden. Insbesondere können jeweils mehrere Formabschnitte dazu eingerichtet sein mit der gleichen Spannung beaufschlagt zu werden. Die Spannungen können dabei jeweils positiv oder negativ sein.

Der wenigstens eine Anzeigeabschnitt ist in eine Mehrzahl von jeweils einzeln ansteuerbaren Pixelabschnitten aufgeteilt. Der Anzeigeabschnitt ist dabei so ausgebildet, dass die jeweiligen Pixelabschnitte unabhängig voneinander, jeweils mit mindestens zwei unterschiedlichen Spannungen beaufschlagt werden können. Dabei kann der Anzeigeabschnitt insbesondere so ausgebildet sein, dass mindestens zwei der Pixelabschnitte mit unterschiedlichen Spannungen beaufschlagt werden können. Mit anderen Worten bedeutet dies, dass ein erster Pixelabschnitt mit einer ersten Spannung und mindestens ein zweiter Pixelabschnitt mit einer zweiten Spannung beaufschlagt werden kann, wobei sich die erste Spannung von der zweiten Spannung unterscheidet. Die Pixelabschnitte sind dabei insbesondere als Elektroden bzw. Elektrodenabschnitte ausgebildet.

Die Formabschnitte und die Pixelabschnitte des mindestens einen Anzeigeabschnitts, dienen dabei jeweils zur Erzeugung eines jeweiligen elektrischen Feldes, welches die Partikel in der Partikelschicht beeinflusst bzw. anordnet, wodurch Anzeigeinhalte auf der Sichtseite der Partikelschicht darstellbar sind. Die Formabschnitte können dabei insbesondere als einzelne Elemente vorliegen, wobei diese bevorzugt so angeordnet sind, dass jeweils mindestens eine Seite jeweils eines Formabschnittes an mindestens einer Seite mindestens eines weiteren Formabschnitts angrenzt oder in engem Abstand angeordnet ist. Der mindestens eine Anzeigeabschnitt ist insbesondere so angeordnet, dass dieser mit mindestens einer Seite an jeweils mindestens eine Seite eines oder mehrerer weiterer Formabschnitte angrenzt oder in engem Abstand angeordnet ist. Bevorzugt ist der wenigstens eine Anzeigeabschnitt so angeordnet, dass dieser an jeder Seite an mindestens einen Formabschnitt angrenzt oder in engem Abstand angeordnet ist.

Die Formabschnitte weisen dabei jeweils eine Formfläche und die Pixelabschnitte jeweils eine Pixelfläche auf. Die Formfläche ist dabei die Fläche der jeweiligen flächig ausgebildeten Formabschnitte. Dabei ist die Formfläche diejenige Fläche der jeweiligen Formabschnitte, welche der Rückseite der Partikelschicht zugewandt ist oder in direktem Kontakt mit der Rückseite der Partikelschicht steht. Die Pixelflächen der jeweiligen Pixelabschnitte sind dabei die Flächen, welche durch das Beaufschlagen der jeweiligen Pixelabschnitte, ein elektrisches Feld erzeugen. Insbesondere können die Pixelabschnitte jeweils mindestens eine einzeln ansteuerbare flächige Elektrode umfassen oder als solche ausgebildet sein, wobei die Pixelfläche der jeweiligen Pixelabschnitte die Fläche der jeweiligen Elektrode oder der jeweiligen Elektroden sind.

Die Formabschnitte und der mindestens eine Anzeigeabschnitt können dabei jeweils aus einem oder mehreren Materialien ausgebildet sein, wobei mindestens eines der Materialien, eine elektrische Leitfähigkeit mindestens an den Formflächen und den Pixelflächen bewirkt.

Die Formflächen weisen dabei jeweils eine Flächengeometrie auf, wobei diese durch die Form der jeweiligen Formabschnitte, insbesondere durch die Seiten der jeweiligen Formabschnitte gebildet ist. Insbesondere ergibt sich die Flächengeometrie aus den Flächen der jeweiligen Formabschnitte, welche elektrisch leitfähigen sind bzw. ein elektrisches Feld erzeugen.

Des Weiteren ist jede der Formflächen um einen Faktor von wenigstens Zehn (10) größer als jede der Pixelflächen. Der Flächeninhalt einer jeweiligen Formfläche ist also wesentlich größer als der Flächeninhalt einer jeweiligen Pixelfläche.

Die Formabschnitte oder die Bereiche der Formabschnitte welche ein elektrisches Feld erzeugen, dienen insbesondere dazu, die Partikel in der Partikelschicht in einem Betriebszustand des Anzeigepaneels anzuordnen, so dass ein eine geometrische Form als Anzeigeinhalt auf der Sichtseite der Partikelschicht dargestellt ist oder darstellbar ist, wobei die jeweils durch die Formabschnitte erzeugten geometrischen Formen den Flächengeometrien der jeweiligen Formflächen bzw. Elektrodenflächen entsprechen.

Hierbei ergibt sich der Vorteil, dass das Anzeigepanel neben mehreren größeren und einzeln ansteuerbaren Bereichen, nämlich den Formabschnitten, auch mindestens einen hochauflösenden Bereich, nämlich den Anzeigeabschnitt, aufweist. Auf dem hochauflösenden Anzeigeabschnitt lassen sich somit nahezu beliebige Anzeigeinhalte darstellen, während die Formabschnitte nur zur Darstellung bestimmter Anzeigeinhalte dienen. Hierdurch können Kosten gespart werden, da die Formabschnitte einzeln und großflächig ansteuerbar sind und keine komplexe Ansteuerung und/oder Verkabelung für diesen Bereich notwendig ist.

Des Weiteren sind die Formabschnitte und der mindestens eine Anzeigeabschnitt so ausgebildet, dass diese jeweils mit mindestens einem Leiterelement verbunden werden können oder verbunden sind. Die Leiterelemente sind insbesondere dazu eingerichtet die Formabschnitte und den wenigstens einen Anzeigeabschnitt anzusteuern. Dabei ist das Anzeigepaneel insbesondere so ausgebildet, dass mindestens zwei Formabschnitte und der Anzeigeabschnitt jeweils durch mindestens eines der Leiterelemente angesteuert werden können. Das Leiterelement ist dabei als elektrisch leitfähige Verbindung, z.B. als Kabel oder Leiterbahn ausgebildet.

Mit anderen Worten weist das Anzeigepaneel also einen oder mehrere Anzeigeabschnitte auf, die jeweilige vergleichsweise feinauflösende Pixel-Displays sind. Diese Displays sind - insbesondere lückenlos anschließend - von den Formabschnitten umgeben, die jedoch keine gemeinsamen Flächenanteile mit den Anzeigeabschnitten aufweisen, sich also außerhalb dieser befinden. Das Anzeigepanel ist außerhalb der Anzeigeabschnitte also nur - vergleichsweise (um den genannten Faktor 10) - grob auflösend ansteuerbar, da nur jeder der Formabschnitte in seiner Gesamtheit - und nicht etwa Teile dessen separat - ansteuerbar ist.

In einer bevorzugten Ausgestaltung ist es vorgesehen, dass in einem Betriebszustand des Anzeigepaneels wenigstens zwei der Pixelabschnitte gemäß eines Multiplexverfahrens angesteuert sind und/oder wenigstens zwei der Formabschnitte individuell angesteuert sind. Der Anzeigeabschnitt weist dabei mindestens drei, insbesondere eine Mehrzahl elektrischer Leiterbahnen auf, welche als Zeilen und Spalten angeordnet sind. Hierbei sind die Pixelabschnitte beispielsweise als Überschneidungspunkte bzw. Überschneidungsbereiche der Zeilen und Spalten ausgebildet. Alternativ kann können die Pixelabschnitte jeweils als mindestens eine flächige Elektrode ausgebildet sein, welche über die Zeilen und Spalten gemäß eines Multiplexverfahrens im Betriebszustand des Anzeigepaneels ansteuerbar ist. Beispielsweise können die elektrischen Leiterbahnen, welche die Zeilen und die Spalten bilden und/oder die Elektrodenflächen auf einem Trägermaterial, beispielsweise einer Folie aufgebracht sein. Das Trägermaterial weist dabei eine geringere elektrische Leitfähigkeit als die elektrischen Leiterbahnen und die Elektrodenflächen auf oder ist aus einem elektrisch isolierenden Material. Beispielsweise kann der Anzeigeabschnitt nach Art eines Dünnschichttransistors ausgebildet sein, welcher an der Rückseite der Partikelschicht angeordnet ist. Mindestens zwei der Formabschnitte können dabei so ausgebildet sein, dass diese in einem Betriebszustand des Anzeigepaneels jeweils individuell angesteuert sind oder ansteuerbar sind. Hierdurch können die mindestens zwei Pixelabschnitte individuell bzw. einzeln angesteuert werden wodurch komplexere Anzeigeinhalte auf der Sichtseite der Partikelschicht angezeigt werden können. Ferner lässt sich durch das individuelle Ansteuern der mindestens zwei Formabschnitte der Verkabelungsaufwand und die damit verbundenen Kosten minimieren.

Eine weitere bevorzugte Ausgestaltung sieht vor, dass wenigstens zwei der jeweils einzeln ansteuerbaren Formabschnitte jeweils die gleiche Flächengeometrie aufweisen. Hierbei sind mindestens zwei der jeweils einzeln ansteuerbaren Formabschnitte so ausgebildet, dass die jeweiligen Flächen bzw. deren Geometrien einander entsprechen. In einem Betriebszustand können somit die Partikel auf der Sichtseite der Partikelschicht durch die mindestens zwei Formabschnitte so angeordnet sein oder werden, dass zwei gleiche Geometrien als Anzeigeinhalt dargestellt sind oder werden. Hierdurch lässt sich beispielsweise ein sich widerholendes Muster auf der Sichtseite der Partikelschicht darstellen.

Alternativ oder ergänzend dazu, sind wenigstens zwei der jeweils einzeln ansteuerbaren Formabschnitte so ausgebildet, dass diese jeweils eine unterschiedliche Flächengeometrie aufweisen.

Dabei ist es beispielsweise auch möglich, dass alle Formabschnitte die gleiche Flächengeometrie aufweisen oder alle Formabschnitte jeweils unterschiedliche Flächengeometrien aufweisen

In einem alternativen Beispiel weisen mindestens zwei der jeweils einzeln ansteuerbaren Formabschnitte die gleiche Flächengeometrie und mindestens zwei der jeweils einzeln ansteuerbaren Formabschnitte eine unterschiedliche Flächengeometrie auf.

In einem bevorzugten Beispiel ist die Mehrzahl der jeweils einzeln ansteuerbaren Formabschnitte mindestens in eine erste Teilmenge mit jeweils der gleichen Flächengeometrie und eine zweite Teilmenge mit jeweils der gleichen Flächengeometrie aufgeteilt ist, wobei die Flächengeometrien der Formabschnitte der ersten Teilmenge sich von den Flächengeometrien der Formabschnitte der zweiten Teilmenge unterscheiden.

Hierdurch lässt sich eine Vielzahl von unterschiedlichen Anzeigeinhalten, insbesondere eine Vielzahl von Mustern, auf der Sichtseite der Partikelschicht darstellen.

In einer möglichen Ausgestaltung ist es vorgesehen, dass wenigstens einer der Anzeigeabschnitte die gleiche Flächengeometrie wie mindestens einer der jeweils einzeln ansteuerbaren Formabschnitte aufweist. Insbesondere sind die Pixelabschnitte so angeordnet, dass diese eine Fläche aufspannen, welche der Flächengeometrie des mindestens einen Formabschnitts gleichen bzw. entsprechen. Somit lässt sich der Anzeigeabschnitt einfacher in die Steuerschicht integrieren. Ferner kann in einem Betriebszustand bei Bedarf ein homogenes Gesamtmuster auf der Sichtseite der Partikelschicht erzeugt werden.

Alternativ oder ergänzend ist es möglich, dass wenigstens einer der Anzeigeabschnitte eine Flächengeometrie aufweist, welche sich von der Flächengeometrie von wenigstens einem der Formabschnitte unterschiedet. Hierdurch lassen sich beispielsweise Anzeigeabschnitte mit einfach zu realisierenden Flächengeometrien bzw. mit einfach zu realisierenden Anordnungen der Pixelabschnitte verwenden, wodurch kosten gespart werden können.

Bevorzugt ist das Anzeigepaneel so ausgebildet, dass wenigstens einer der Anzeigeabschnitte dazu ausgebildet ist, ein Muster auf der Partikelschicht zu erzeugen, dass wenigstens einem der jeweils einzeln ansteuerbaren Formabschnitte oder einer durch wenigstens einen der Formabschnitte erzeugten Darstellung auf der Sichtseite der Partikelschicht gleicht oder entspricht. Das Muster ist dabei mindestens als Darstellung ausgebildet, welche durch mindestens einen der Formabschnitte auf der Sichtseite de Partikelschicht in einem Betriebszustand erzeugt ist oder erzeugbar ist. Hierbei ist der Anzeigeabschnitt insbesondere so ausgebildet, dass dieser in einem Betriebszustand des Anzeigepaneels eine Mehrzahl von Partikeln so auf der Sichtseite der Partikelschicht anordnet, dass ein Muster als Darstellung mit einer Form erzeugt wird, welche der Flächengeometrie des wenigstens einen Formabschnitts gleicht bzw. entspricht oder der Form bzw. Flächengeometrie der durch den wenigstens einen Formabschnitt auf der Sichtfläche erzeugten Darstellung gleicht bzw. entspricht. Mit anderen Worten bedeutet dies, dass das Anzeigepaneel dazu ausgebildet ist in einem Betriebszustand mindestens eine Darstellung nachzubilden, welche durch mindestens einen der Formabschnitte auf der Sichtseite der Partikelschicht erzeugt ist. Dabei sind die Pixelabschnitte in einem Betriebszustand des Anzeigepaneels so angesteuert, dass mehrere Pixelabschnitte jeweils ein elektrisches Feld erzeugen, welches die darüberliegenden Partikel in der Partikelschicht so anordnet, dass eine Darstellung auf der Sichtseite der Partikelschicht erzeugt wird, welche in ihrer Form einer durch einen Formabschnitt erzeugten Darstellung gleicht. Hierdurch lässt sich ein homogener Anzeigeinhalt erzeugen.

In einer Weiterbildung ist es vorgesehen, dass die jeweils einzeln ansteuerbaren Formabschnitte dazu ausgebildet sind, ein regelmäßiges Muster auf der Sichtseite der Partikelschicht zu erzeugen und wenigstens einer der Anzeigeabschnitte dazu ausgebildet ist, das Muster zumindest annähernd durchgehend bzw. ununterbrochen fortzusetzen. Das durch die Formabschnitte erzeugte Muster setzt sich dabei insbesondere aus den Darstellungen zusammen, welche jeweils durch einen Formabschnitt auf der Sichtfläche der Partikelschicht in einem Betriebszustand erzeugt sind oder erzeugbar sind.

Beispielsweise kann der Anzeigeabschnitt dazu ausgebildet sein, wenigstens eine Darstellung, welche auf der Sichtseite der Partikelschicht durch einen Formabschnitt erzeugt ist zu ergänzen. Beispiels weise kann eine Darstellung, welche durch einen Formabschnitt, welche in einem Betriebszustand des Anzeigepaneels erzeugt ist, so durch Darstellung auf der Partikelschicht, welche durch den Anzeigeabschnitt erzeugt ist, ergänzt werden, dass sich beide Darstellungen in ein auf dem Anzeigepaneel dargestelltes Muster integrieren. Alternativ oder ergänzend, kann der Anzeigeabschnitt auch dazu ausgebildet sein, mindestens eine Darstellung auf der Sichtseite der Partikelschicht zu erzeugen, welche mindestens einer der Darstellungen gleicht oder entspricht, welche durch mindestens einen Formabschnitt auf der Sichtseite der Partikelschicht erzeugt ist oder erzeugbar ist.

Eine bevorzugte Weiterbildung sieht vor, dass wenigstens einer der Anzeigeabschnitte dazu ausgebildet ist, Textinhalte und/oder Symbole auf der Sichtseite der Partikelschicht in einem Betriebszustand des Anzeigepaneels zu erzeugen. Die Symbole können insbesondere Sicherheitssymbole wie z.B. Anschnallzeichen oder Servicesymbole sein. Insbesondere ist wenigstens einer der Anzeigeabschnitte dazu ausgebildet eine reine Textinhalte zu erzeugen. Bevorzugt ist wenigstens einer der Anzeigeabschnitte dazu ausgebildet mindestens ein Muster und Textinhalte und/oder Symbole auf der Sichtseite zu erzeugen, wobei die Muster beispielsweise von den Textinhalten und/oder den Symbolen überlagert dargestellt werden können. Beispiels weise kann das Anzeigeelement auch so ausgebildet sein, dass die Textinhalte und/oder die Symbole, in einem Betriebszustand des Anzeigepaneels, dynamisch, nach Art eines bewegten Bildes auf der Sichtseite der Partikelschicht erzeugt werden. Somit kann der Anzeigeabschnitt einerseits als Designelement und andererseits als eine Art Anzeigetafel für die Übermittlung von Informationen genutzt werden.

Eine mögliche Ausgestaltung sieht vor, dass das Anzeigepaneel dazu ausgebildet ist ein farbloses Bild bzw. ein Schwarz-Weiß-Bild als Anzeigeinhalt auf der Sichtseite der Partikelschicht in einem Betriebszustand des Anzeigepaneels zu erzeugen bzw. anzuzeigen. Dabei werden schwarze Bildbereich, weiße Bildbereiche und/oder Bildbereich die in einer Grauabstufung dargestellt sind, erzeugt. Das Schwarz-Weiß-Bild ist in seiner Form und Gestalt insbesondere so ausgebildet, wie dies bereits zuvor beschrieben wurde. Hierbei ist die Partikelschicht so ausgebildet, dass eine Vielzahl von schwarzen und eine Vielzahl von weißen Partikeln in der Partikelschicht angeordnet sind. Insbesondere weist die Partikelschicht eine Vielzahl von Kapseln mit jeweils mehreren schwarzen und mehreren weißen Partikeln auf. Da die Ansteuerung bei der Erzeugung eines Schwarz-Weiß-Bildes weniger komplex ist und der Aufbau der Partikelschicht weniger komplex ist können somit Kosten gespart werden.

Eine alternative Ausgestaltung sieht vor, dass das Anzeigepaneel dazu ausgebildet ist ein mehrfarbiges Bild zu erzeugen bzw. als Anzeigeinhalt auf der Sichtseite der Partikelschicht darzustellen. Das mehrfarbige Bild ist in seiner Form und Gestalt insbesondere so ausgebildet, wie dies bereits zuvor beschrieben wurde. Das mehrfarbige Bild kann in einem Betriebszustand des Anzeigepaneels durch eine zusätzliche Farbfilterschicht an der Sichtseite der Partikelschicht erzeugt sein oder erzeugbar sein. Alternativ kann das mehrfarbige Bild in einem Betriebszustand des Anzeigepaneels durch Partikel mindestens zweier unterschiedlicher Farben erzeugt werden oder erzeugbar sein, wobei jedes der Partikel eine bestimmte Farbe aufweist. Alternativ kann die Partikelschicht auch Partikel mindestens einer Farbe sowie schwarze und weiße Partikel aufweisen. Hierdurch lassen sich komplexe Anzeigeinhalte auf dem Anzeigepaneel darstellen.

Eine bevorzugte Ausgestaltung sieht vor, dass das Anzeigepaneel als flexible Folie ausgebildet ist. Dabei ist die Frontschicht, die Partikelschicht und die Steuerschicht jeweils flexibel ausgebildet. Insbesondere ist das Anzeigepaneel so ausgebildet, dass es auf gekrümmten Oberflächen und/oder auf bzw. über Kanten angeordnet werden kann. Hierdurch lässt sich das Anzeigepaneel auch in Passagierkabinen mit komplexen Raumgeometrien integrieren.

Mit anderen Worten wird die Aufgabe durch ein Paneel (Anzeigepaneel) mit einer farb- und musterveränderbaren E-Paper-Folie und in der E-Paper-Folie integriertem E-Paper-Display (Anzeigeabschnitt) bzw. Anzeigebereich gelöst. Dabei ist es vorgesehen, dass in der E-Paper-Folie, im gleichen Lagenaufbau größere Regionen diskret (also die Formabschnitte nur jeweils in ihrer Gesamtheit) und detaillierte Regionen (die als Pixeldisplay ausgeführten Anzeigeabschnitte) über ein multiplexendes Ansteuerverfahren betrieben werden bzw. in einem Betriebszustand der E-Paper-Folie angesteuert bzw. angezeigt werden.

Das E-Paper-Display (Anzeigeabschnitt) ist so ausgebildet, dass lesbare Informationen (Textinhalte und/oder Symbole) dann gezeigt werden, wenn nötig. Wenn nicht benötigt, soll das E-Paper-Display (Anzeigeabschnitt) bzw. der Anzeigebereich wie die normale Dekorfolie (Bereich des Anzeigepaneels, auf dem der Anzeigeinhalt durch die einzeln in ihrer jeweiligen Gesamtheit angesteuerten Formabschnitte erzeugt ist), also der Bereich der E-Paper-Folie, welcher nicht als E-Paper-Display (Anzeigeabschnitt) bzw. der Anzeigebereich ausgebildet ist, aussehen. Der Anzeigebereich (Anzeigeabschnitt) soll "versteckt" sein. Dies wird dadurch erreicht, dass durch die entsprechende Ansteuerung (der einzelnen Pixel) des Anzeigeabschnitts die Form bzw. das Muster der Formabschnitte in den Anzeigeabschnitt hinein fortgesetzt wird. Mit anderen Worten wird die Pixeldarstellung im Anzeigeabschnitt genutzt, in den Anzeigeabschnitt hinein "fortgesetzte" Formabschnitte (z.B. ein sich regelmäßig wiederholendes Muster) anzuzeigen.

Somit kann erzielt werden, dass das Ansteuerungskonzept nicht zu komplex und überausgelegt ist, da nur ein Bereich, und zwar der Anzeigebereich (Anzeigeabschnitt) hoch aufgelöst ist, während der Rest der E-Paper-Folie eine geringe Auflösung (ein "Pixel" entspricht dann einem Formabschnitt) aufweist. Beispielsweise kann hierbei die Technologie Prism3 und Gallery plus des Unternehmens E Ink eingesetzt werden.

Sowohl bei der Dekor-Folie als auch beim Display (Anzeigeabschnitt) bzw. dem Anzeigebereich sind zwei von drei Schichten identisch. Die obere Ito Schicht (Frontschicht) und die Partikelschicht. Lediglich die Kontaktierungsschicht (Steuerschicht) wird entweder diskret verdrahtet oder gliedert sich in Zeilen und Spalten auf.

Die neuartige Kontaktierungsschicht (Steuerschicht), auch Backplane genannt, hat nun diskrete Anschlüsse und einen oder mehrere multiplexende Bereiche (Pixelabschnitte). Diese Bereiche werden wiederum jeweils separat, zum Beispiel über ein Flachbandkabel, abgeführt.

Wenn keine Informationen benötigt werden, erzeugt das Display (Anzeigeabschnitt) die gleichen Muster und Farben, wie der es umgebende äußere Bereich (Formabschnitte). Aufgrund der gleichen Technologie ist kein Unterschied zwischen den Bereichen, wie z.B. Farbabweichung etc. sichtbar. Die Folie (Anzeigepaneel) erscheint komplett durchgängig als Dekorfolie. Wird jetzt die Darstellung von unterschiedlicher, hochauflösender Information, Bildern etc. gewünscht, dann kann das Display (Anzeigeabschnitt) diese erzeugen. D.h. im Bereich der Dekorfolie erscheint auf einmal die zusätzliche Info, Bild etc. Auch muss das Display (Anzeigeabschnitt) die Information (Textinhalte und/oder Symbole) nicht auf dem kompletten rechteckigen Display (Anzeigeabschnitt) erzeugen, sondern kann die angrenzende Farbe, Kontur, Muster der Dekorfolie übernehmen und nur Text etc. darstellen, was zu einem noch besseren Effekt führt. Das Dekormuster, welches durch die das Display (Anzeigeabschnitt) umgebenden Bereich (Formabschnitte) erzeugt wird, grenzt nahezu nahtlos am Display (Anzeigeabschnitt) an. Hierdurch kann eine Anzeige von Fluginformationen bzgl. Anschlussflügen nur kurz vor Landung dargestellt werden, wobei ansonsten normale Muster dargestellt werden.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
- Figur 1: einen Aufbau eines Anzeigepaneels umfassend eine Frontschicht, eine Partikelschicht und eine Steuerschicht;
- Figur 2: eine Steuerschicht eines Anzeigepaneels, mit mehreren Formabschnitten und zwei Anzeigeabschnitten sowie mehreren Leiterelementen;
- Figur 3: ein Anzeigepaneel, wobei ein Anzeigeinhalt auf dem Anzeigepaneel erzeugt ist.

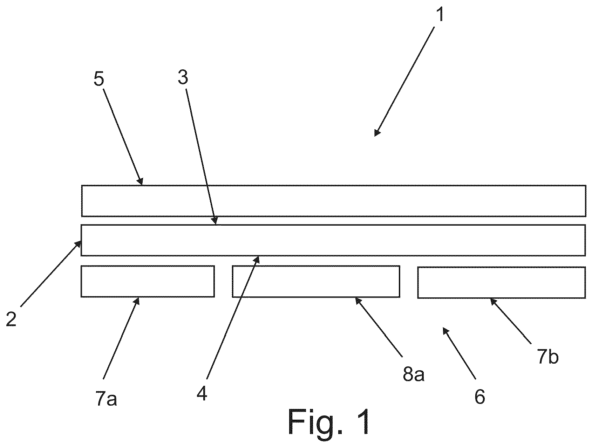

Die Darstellung in Figur 1 zeigt einen möglichen Aufbau eines Anzeigepaneels in geschichteter Weist. Das Anzeigepaneel 1 umfasst dabei eine Frontschicht 5, eine Partikelschicht 2 und eine Steuerschicht 6. Die Frontschicht 5 ist dabei oberhalb der Partikelschicht 2 auf einer Sichtseite 3 der Partikelschicht 2 angeordnet und die Steuerschicht 6 ist dabei unterhalb der Partikelschicht 2 auf einer Rückseite 4 der Partikelschicht 2 angeordnet. Die Frontschicht 5, die Partikelschicht 2 und die Steuerschicht 6 sind dabei jeweils flächig ausgebildet und bilden einen flächigen Schichtstapel das Anzeigepaneel 1 oder einen Teil des Anzeigepaneels 1 bildet. Dabei sind die Frontschicht 5 und die Partikelschicht 2 durchgehend und ununterbrochen ausgebildet. Die Steuerschicht 6 besteht dabei aus zwei einzeln und jeweils nur in ihrer Gesamtheit ansteuerbaren Formabschnitten 7a, b und einem Anzeigeabschnitt 8a mit einzeln ansteuerbaren Pixelabschnitten 13a, b, wobei die Pixelabschnitte 13a, b nicht in Figur 1 dargestellt sind. Mit anderen Worten ist der Anzeigeabschnitt 8a nicht nur in seiner Gesamtheit, sondern dessen Teilbereiche pixelbasiert nach Art eines Displays ansteuerbar. Die Partikelschicht 2 umfasst dabei eine Vielzahl von Farbpartikeln. Die Formabschnitte 7a, b und der Anzeigeabschnitt 8a, dienen jeweils dazu mindestens ein elektrisches Feld zu erzeugen, wodurch die Farbpartikel der Partikelschicht 2, welche sich oberhalb der jeweiligen Formabschnitte 7a, b und des Anzeigeabschnitts 8a befinden, angeordnet werden, wodurch ein Anzeigeinhalt auf der Sichtseite 3 der Partikelschicht 2 erzeugt werden kann.

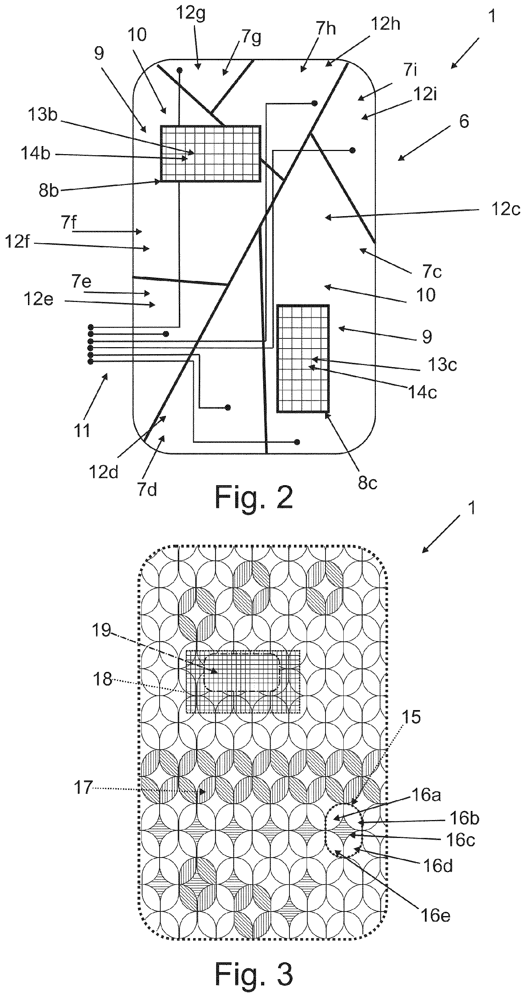

Die Darstellung in Figur 2 zeigt eine Steuerschicht 6 eines Anzeigepaneels 1. Hierbei besteht die Steuerschicht 6 aus mehreren Formabschnitten 7c-i (zur Verdeutlichung durch verdickte Linien voneinander getrennt) und zwei Anzeigeabschnitten 8b, c (zur Verdeutlichung durch verdickte Linien umrandet). Formabschnitte 7c-i und Anzeigeabschnitten 8b, c überlappen sich nicht, grenzen aber lückenlos aneinander an. Die Formabschnitte 7c-i weisen dabei jeweils eine Formfläche 12c-i auf, wobei sich die Flächengeometrien der jeweiligen Formflächen 12 c-i voneinander unterscheiden. Die Anzeigeabschnitte 8b, c sind dabei so in der Steuerschicht 6 angeordnet, dass die Formflächen 12f und 12h teilweise von dem Anzeigeabschnitt 8b ersetzt (also dort ausgeschnitten / ausgespart / nicht vorhanden) sind und die Formfläche 12c teilweise von dem Anzeigeabschnitt 8c ersetzt (also dort ausgeschnitten / ausgespart / nicht vorhanden) ist. Der Anzeigeabschnitt 8b weist dabei eine Vielzahl von einzeln ansteuerbaren Pixelabschnitten 13b (symbolisch als Gitter dargestellt) auf wobei die Pixelabschnitte 13b jeweils eine Pixelfläche 14b aufweisen. Der Anzeigeabschnitt 8c weist dabei eine Vielzahl von einzeln ansteuerbaren Pixelabschnitten 13c auf (symbolisch als Gitter dargestellt), wobei die Pixelabschnitte 13c jeweils eine Pixelfläche 14c aufweisen. Des Weiteren sind die Pixelabschnitte 13b, c jeweils durch Zeilen 9 und Spalten 10 gebildet, wobei diese als elektrische Leiterbahnen ausgebildet sind und wobei die Zeilen 9 und/oder die Spalten 10 gemäß einem Multiplexverfahren ansteuerbar sind. Die Darstellung in Figur 2 zeigt auch mehrere Leiterelemente 11, wobei jeweils eines der Leiterelemente mit jeweils einem Formabschnitt verbunden ist. Die Leiterelemente 11 dienen dabei zur Ansteuerung der Formabschnitte 7c-i.

Die Darstellung in Figur 3 zeigt ein Anzeigepaneel 1 in Sichtrichtung auf eine Sichtseite 3 einer Partikelschicht 2, wobei ein Anzeigeinhalt auf der Sichtseite 3 erzeugt ist. Der Anzeigeinhalt erstreckt sich dabei über das gesamte Anzeigepaneel 1. Das Anzeigepaneel 1 ist dazu ausgebildet, einen sich mit der Zeit ändernden Anzeigeinhalt anzuzeigen. Der in der Figur 3 dargestellte Anzeigeinhalt 1 ist dabei eine Momentaufnahme des sich mit der Zeit ändernden Anzeigeinhaltes 1. Dabei weist der Anzeigeinhalt die Anzeigebereiche 17 und 18 auf. Der Anzeigeinhalt im Anzeigebereich 17 wird dabei durch eine Vielzahl von Formabschnitten 7a-i erzeugt, wobei diese in Figur 3 nicht dargestellt sind. Der Anzeigeinhalt im Anzeigebereich 18 wird dabei von einem Anzeigeabschnitt 8a, b, c erzeugt, wobei der Anzeigeabschnitt 8a, b, c in Figur 3 nicht dargestellt ist. Die Darstellung in Figur 3 zeigt, dass der Anzeigeinhalt im Anzeigebereich 17 ein Muster aus mehreren ovalen und sich wiederholenden Musterabschnitten 15 umfasst. Jeder der ovalen Musterabschnitte 15 im Anzeigebereich 17 besteht dabei aus mehreren Musterabschnittsegmenten 16a, b, c, d. Die Musterabschnittsegmente 16a, b, c, d weisen dabei jeweils eine bestimmte Flächengeometrie auf. Die Musterabschnittsegmente 16a, b, c, d und deren jeweilige Flächengeometrie, werden dabei durch jeweils einen einzeln aber nur in seiner jeweiligen Gesamtheit ansteuerbaren Formabschnitt 7a-i auf der Sichtseite 3 der Partikelschicht 2 erzeugt. Die Formabschnitte 7a-i weisen dabei eine Formfläche 12c-i mit einer jeweiligen Flächengeometrie auf. Jedes der jeweiligen Musterabschnittsegmente, weist dabei die gleiche Flächengeometrie wie die Formfläche des Musterabschnittsegments erzeugenden Formabschnitts auf. Mit anderen Worten bedeutet dies, dass jeder Formabschnitt ein Musterabschnittsegment erzeugt, wobei die Flächengeometrie der Formfläche die gleich ist wie die Flächengeometrie des Musterabschnittsegments.

Der in dem Anzeigebereich 18 durch den Anzeigeabschnitt 8a, b, c erzeugte Anzeigeinhalt, weist dabei das gleiche Muster wie das in dem Anzeigebereich 17 erzeugte Muster auf, wobei das Muster in dem Anzeigebereich 18 durch eine Vielzahl von einzeln ansteuerbaren Pixelabschnitten 13b, c erzeugt ist (wieder durch ein Gitter symbolisch angedeutet). Dabei wird das Muster, welches im Anzeigebereich 17 durch die jeweiligen Formabschnitte erzeugt ist fortgeführt bzw. in gleicher Weise und dem Muster folgend ergänzt. Die Mustersegmentabschnitte 16a, b, c, d, e aus denen das Muster in den Anzeigebereichen 17 und 18 gebildet ist, können dabei in unterschiedlichen Farben erscheinen. Dabei erscheinen die Musterabschnittsegmente 16a, b, c, d, e mit horizontaler Schraffur in einer Grauabstufung bzw. in Grau, die Mustersegmentabschnitte 16a, b, c, d, e mit vertikaler Schraffur in blau, die Musterabschnittsegmente 16a, b, c, d, e mit schräger Schraffur in schwarz und die Mustersegmentabschnitt 16a, b, c, d, e ohne Schraffur in Weiß. Das Anzeigepaneel 1 ist dabei so ausgebildet, dass in einem Betriebszustand bzw. aktiven Zustand bestimmte Musterabschnittsegmente, z.B. mehrere der sternförmig ausgebildeten Musterabschnittsegmente (wie das Musterabschnittsegment 16c), ihre Farbe ändern, wobei der Rest der Musterabschnittsegmente 16a, b, d, e die farbliche Erscheinung nicht ändert. Dabei ist das Anzeigepaneel 1 so ausgebildet, dass jedes der Mustersegmente 16a, b, c, d, e jeweils eine der beschriebenen Farben darstellen kann.

Ergänzend ist im Anzeigebereich 18 ein Text- und/oder Symbolbereich 19 durch eine Strichpunktlinie dargestellt, wobei dieser Bereich dazu dient, Textinhalte und/oder Symbole zu erzeugen bzw. anzuzeigen, wobei die Textinhalte und/oder die Symbole durch die Pixelabschnitte 13b, c erzeugt werden können. Hier ist das Muster aus dem Anzeigebereich 17 jedoch nicht mehr fortgesetzt. Die Pixeldarstellung im Symbolbereich 19 wird also nur für die pixelgestützte Darstellung von Text / Grafiken / Symbolen genutzt.

Für den Betrachter wirkt es, also wäre nur im Symbolbereich 19 ein Pixeldisplay in die ansonsten uniform wirkende Fläche des Anzeigepaneels 1 eingelassen. Die eigentliche Grenze des Anzeigebereiches 18 ist idealerweise also für den Betrachter nicht erkennbar, da sich (im Anzeigebereich 18 durch Pixel simuliert) das Muster aus dem Anzeigebereich 17 nahtlos über die Grenze hinweg bis zum Symbolbereich 19 erstreckt.

### Bezugszeichenliste

- 1: Anzeigepaneel
- 2: Partikelschicht
- 3: Sichtseite der Partikelschicht
- 4: Rückseite der Partikelschicht
- 5: Frontschicht
- 6: Steuerschicht
- 7a-i: Formabschnitt
- 8a,b,c: Anzeigeabschnitt
- 9: Zeilen
- 10: Spalten
- 11: Leiterelemente
- 12c-i: Formflächen
- 13b,c: Pixelabschnitte
- 14b,c: Pixelflächen
- 15: Musterabschnitt
- 16a-e: Musterabschnittsegmente
- 17: Anzeigebereich
- 18: Anzeigebereich
- 19: Text- und/oder Symbolbereich

## Patentansprüche

1. Anzeigepaneel (1) für eine Passagierkabine in einem Flugzeug,
wobei das Anzeigepaneel (1) nach Art eines elektronischen Papiers ausgebildet ist,
mit einer Partikelschicht (2), welche eine Sichtseite (3) und eine der Sichtseite (3) gegenüberliegende Rückseite (4) aufweist,
mit einer Frontschicht (5), welche die Partikelschicht (2) an der Sichtseite (3) bedeckt, wobei sich die Partikelschicht (2) und die Frontschicht (5) flächig über das gesamte Anzeigepaneel (1) erstrecken,
mit einer Steuerschicht (6), welche an der Rückseite (4) der Partikelschicht (2) angeordnet ist,
wobei die Steuerschicht (6) besteht aus:
- Einer Mehrzahl von jeweils einzeln ansteuerbaren Formabschnitten (7a - i), wobei die Formabschnitte (7a - i) jeweils eine Formfläche (12 a - i) aufweisen;
- und wenigstens einem von den Formabschnitten (7a-i) verschiedenen Anzeigeabschnitt (8a, b, c),
- wobei der Anzeigeabschnitt (8a, b, c) in eine Mehrzahl von jeweils einzeln ansteuerbaren Pixelabschnitten (13b, c) aufgeteilt ist, wobei die Pixelabschnitte (13b, c) jeweils eine Pixelfläche (14b, c) aufweisen;
- wobei jede der Formflächen (12 a - i) einen um einen Faktor von wenigstens Zehn größeren Flächeninhalt als jede der Pixelflächen (14b, c) aufweist.

2. Anzeigepaneel (1) nach Anspruch 1, wobei in einem Betriebszustand des Anzeigepaneels (1) wenigstens zwei der Pixelabschnitte (13b, c) gemäß eines Multiplexverfahrens angesteuert sind und/oder wenigstens zwei der Formabschnitte (7 a - i) individuell angesteuert sind.

3. Anzeigepaneel (1) nach einem der vorhergehenden Ansprüche, wobei wenigstens zwei der jeweils einzeln ansteuerbaren Formabschnitte (7 a - i) jeweils die gleiche Flächengeometrie aufweisen.

4. Anzeigepaneel (1) nach einem der vorhergehenden Ansprüche, wobei wenigstens zwei der jeweils einzeln ansteuerbaren Formabschnitte (7 a - i) jeweils eine unterschiedliche Flächengeometrie aufweisen.

5. Anzeigepaneel (1) nach einem der vorhergehenden Ansprüche, wobei wenigstens einer der Anzeigeabschnitte (8a, b, c) die gleiche Flächengeometrie wie mindestens einer der Formabschnitte (7 a - i) aufweist.

6. Anzeigepaneel (1) nach einem der vorhergehenden Ansprüche, wobei wenigstens einer der Anzeigeabschnitte (8a, b, c) eine Flächengeometrie aufweist, welche sich von der Flächengeometrie von wenigstens eine der Formabschnitte (7 a - i) unterscheidet.

7. Anzeigepaneel (1) nach einem der vorhergehenden Ansprüche, wobei wenigstens einer der Anzeigeabschnitte (8a, b, c) dazu ausgebildet ist, ein Muster auf der Partikelschicht (2) zu erzeugen, das wenigstens einem der Formabschnitte (7 a - i) oder einer durch wenigstens einen der Formabschnitte (7 a - i) erzeugten Darstellung auf der Sichtseite (3) der Partikelschicht (2) gleicht.

8. Anzeigepaneel (1) nach Anspruch 7, wobei
- die Formabschnitte (7 a - i) ausgebildet sind, ein regelmäßiges Muster auf der Partikelschicht (2) zu erzeugen, und
- wenigstens einer der Anzeigeabschnitte (8a, b, c) dazu ausgebildet ist, das Muster zumindest annähernd durchgehend / ununterbrochen fortzusetzen.

9. Anzeigepaneel (1) nach einem der vorhergehenden Ansprüche, wobei wenigstens einer der Anzeigeabschnitte (8a, b, c) dazu ausgebildet ist, Textinhalte und/oder Symbole auf der Sichtseite (3) der Partikelschicht (2) zu erzeugen.

10. Anzeigepaneel (1) nach einem der vorhergehenden Ansprüche, wobei das Anzeigepaneel (1) dazu ausgebildet ist, ein farbloses Bild zu erzeugen.

11. Anzeigepaneel (1) nach einem der vorhergehenden Ansprüche, wobei das Anzeigepaneel (1) dazu ausgebildet ist ein mehrfarbiges Bild zu erzeugen.

12. Anzeigepaneel (1) nach einem der vorhergehenden Ansprüche, wobei das Anzeigepaneel (1) als flexible Folie ausgebildet ist.
